(19) Europäisches Patentamt
European Patent Office
Office européen des brevets

(11) EP 2 424 081 A1

(12) **EUROPEAN PATENT APPLICATION**
published in accordance with Art. 153(4) EPC

(43) Date of publication:
**29.02.2012 Bulletin 2012/09**

(51) Int Cl.:
*H02K 7/10* (2006.01)   *B60K 7/00* (2006.01)
*F16H 15/52* (2006.01)

(21) Application number: **09843634.8**

(22) Date of filing: **21.04.2009**

(86) International application number:
**PCT/JP2009/057885**

(87) International publication number:
**WO 2010/122634 (28.10.2010 Gazette 2010/43)**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(71) Applicant: **Toyota Jidosha Kabushiki Kaisha Toyota-shi, Aichi 471-8571 (JP)**

(72) Inventors:
• **OGAWA, Hiroyuki**
**Toyota-shi**
**Aichi 471-8571 (JP)**
• **TOMOMATSU, Daisuke**
**Toyota-shi**
**Aichi 471-8571 (JP)**
• **MURAKAMI, Akira**
**Toyota-shi**
**Aichi 471-8571 (JP)**

(74) Representative: **Kuhnen & Wacker**
**Patent- und Rechtsanwaltsbüro**
**Prinz-Ludwig-Strasse 40A**
**85354 Freising (DE)**

(54) **MOTOR WITH TRANSMISSION FUNCTION**

(57)    To provide an entirely downsized electric motor capable of improving energy efficiency

An electric motor 1 having a speed change function is configured to differentiate a rotational speed of a rotor 5 from a rotational speed of an output shaft 13 outputting a torque transmitted from the rotor 5. The electric motor 1 comprises: a stator coil 4 arranged on an inner circumferential face of a cylindrical outer case 6; a cylindrical rotor 5 which is arranged in an inner circumferential side of the stator coil 4, and which is adapted to generate a torque by receiving a magnetic force generated by the stator coil 4; and a continuously variable transmission mechanism 3, which is arranged in an inner circumferential side of the rotor 5, and which is adapted to continuously vary a ratio between a rotational speed of an input member 32 connected with the rotor 5, and a rotational speed of an output member 33 connected with the output shaft 13 and rotated by the torque from the input member 32.

Fig. 1

**Description**

TECHNICAL FIELD

This invention relates to an electric motor having a speed change function, which is capable of varying a ratio between a rotational speed of a rotor and a rotational speed of an output shaft.

BACKGROUND ART

Output characteristics of an electric motor vary depending on a size and the kind of the electric motor, and the electric motor have various kinds of needs. For example, some of the conventional electric motors may fulfill a requirement of output characteristics but may not fulfill a requirement of size. In order to fulfill those requirements, according to the prior art, an electric motor is provided with a transmission arranged in an outer case holding a rotor and a stator, and configured to output the torque of the rotor from the output shaft while varying the torque according to a speed change ratio.

For example, Japanese Patent Laid-Open No. 2007-269129 discloses a wheel rotating device, in which a stator is disposed inwardly in radial directions of the wheel coupled to a hub, a cylindrical rotor is disposed inwardly in radial directions of the stator in a rotatable manner, and a planetary gear mechanism is disposed inwardly in radial directions of the rotor. According to the teachings of Japanese Patent Laid-Open No. 2007-269129, the rotor is connected with a sun gear of the planetary gear mechanism, a ring gear is attached to a case integral with the stator and fixed, and a carrier is connected with the hub. Therefore, the planetary gear mechanism serves as a speed reducer, and a speed reducing ratio is unambiguously governed by a gear ratio of the planetary gear mechanism.

In addition, Japanese Patent Laid-Open No. 6-328950 discloses a hybrid vehicle in which a planetary gear mechanism and a clutch adapted to integrate the planetary gear mechanism are arranged in an inner circumferential side of a motor. A stator of the motor is fixed to an inner circumferential face of a transmission housing, and the rotor is connected with the ring gear. The carrier is connected with an output shaft, and the clutch is adapted to connect the sun gear with the carrier selectively. Therefore, in the hybrid vehicle taught by Japanese Patent Laid-Open No. 6-328950, a speed change ratio is shifted between two stages.

Further, Japanese Patent Laid-Open No. 2008-75878 discloses a continuously variable transmission, in which a plurality of spherical rolling member is individually held in a rotatable manner by a spindle tiltable with respect to a rotational canter axis of support member. A driving member and a driven member are arranged on an outer circumferential side of the rolling member and those driving member and driven member are opposed to each other across the rolling member. More specifically, an axial end face of each of the driving member and the driven member is pushed onto an outer face of the rolling member. Therefore, a rotation radius of the rolling member between a point to which the driving member is contacted (and the spindle), and a rotation radius of the rolling member between a point to which the driven member is contacted (and the spindle), are varied when the spindle as a rotational center of the rolling member is tilted. As a result, circumferential velocities of those contact points, that is, rotational speeds of the driving member and the driven member are varied. Therefore, a speed change ratio is varied continuously or steplessly. In addition, a power is transmitted to the driving member thorough a pulley arranged integrally and coaxially with the driving member.

According to the device taught by Japanese Patent Laid-Open No. 2007-269129, a ratio between a rotational speed of the rotor and a rotational speed of the wheel has to be governed by the planetary gear mechanism. Therefore, in case of driving a vehicle by driving a wheel directly by the motor, the motor has to be driven at a speed at which energy efficiency is low depending on a vehicle speed. Thus, the device taught by Japanese Patent Laid-Open No. 2007-269129 has to be improved to optimize the energy efficiency.

As described, the hybrid vehicle taught by Japanese Patent Laid-Open No. 6-328950 is capable of shifting the speed change ratio between two stages. However, a rotational speed of the motor has to be fixed to high speed or low speed according to the speed change ratio. That is, the hybrid vehicle taught by Japanese Patent Laid-Open No. 6-328950 is incapable of driving the motor at an intermediate speed, as well as at a higher speed and a lower speed. Thus, according to the teachings of Japanese Patent Laid-Open No. 6-328950, the motor has to be driven at a speed at which energy efficiency is low depending on a vehicle speed, as in the device taught by Japanese Patent Laid-Open No. 2007-269129. Therefore, the hybrid vehicle taught by Japanese Patent Laid-Open No. 6-328950 is also necessary to be improved to optimize the energy efficiency. As to the continuously variable transmission taught by Japanese Patent Laid-Open No. 2008-75878, the power is transmitted to the driving member through the pulley as described above. Therefore, according to the teachings of Japanese Patent Laid-Open No. 2008-75878, a drive unit has to be enlarged entirely. For this reason, the continuously variable transmission taught by Japanese Patent Laid-Open No. 2008-75878 is difficult to be mounted on a vehicle.

DISCLOSURE OF THE INVENTION

The present invention has been conceived noting the technical problems thus far described, and its object is to provide a compact electric motor which is capable of improving energy efficiency.

In order to achieve the above-mentioned object, according to the present invention, there is provided an electric motor having a speed change function, which is configured to differentiate a rotational speed of a rotor from a rotational speed of an output shaft for outputting a torque transmitted from the rotor, characterized by comprising: a stator coil, which is arranged on an inner circumferential face of a cylindrical outer case; a cylindrical rotor, which is arranged in an inner circumferential side of the stator coil, and which is adapted to generate a torque by receiving a magnetic force generated by the stator coil; and a continuously variable transmission mechanism, which is arranged in an inner circumferential side of the rotor, and which is adapted to continuously vary a ratio between a rotational speed of an input member connected with the rotor, and a rotational speed of an output member connected with the output shaft and rotated by the torque from the input member.

Specifically, the continuously variable transmission mechanism comprises: a rolling member, which is configured to tilt a rotational center axis thereof, and whose outer face is formed into a smooth curved face; a rotating shaft whose outer circumferential face is contacted with the rolling member situated in an outer circumferential side thereof; and two rotary members contacted with the outer circumferential face of the rolling member in a torque transmittable manner from both sides of the rolling member in a direction along a rotational center axis of the rolling member. In the continuously variable transmission mechanism, one of the rotating shaft and the two rotary members is connected with the rotor, and another one of the rotating shaft and the two rotary members serves as an output member.

According to the present invention, a permanent magnet is attached to the rotor and the aforementioned two rotary members are contacted individually with the outer circumferential face of the rolling member in the rotor side. For example, the rolling member comprises a magnetic body attracted by the permanent magnet toward the rotor side.

As explained above, a permanent magnet is attached to the rotor, and the aforementioned two rotary members are contacted individually with the outer circumferential face of the rolling member in the rotor side. However, it is also possible to form the rolling member using nonmagnetic material.

The outer case comprises a cylindrical portion in which the stator coil is attached to an inner circumferential face thereof; and an end plate formed integrally with one of axial ends of the cylindrical portion. More specifically, one of the rotary members situated closer to the end plate is connected with the rotor, and the other rotary member is connected with the output shaft protruding in a direction opposite to the end plate.

In addition, the electric motor of the present invention comprises: a cam mechanism, which is interposed between the rotor and one of the rotary members, and which is adapted to convert a torque acting between the rotor and said one of the rotary members into a thrust force in the axial direction thereby pushing said one of the rotary members onto the rolling member.

The electric motor of the present invention further comprises: another cam mechanism, which is interposed between the output shaft and the other rotary member functioning as an output member, and which is adapted to convert a torque acting between the output shaft and the other rotary member thereby pushing the other rotary member onto the rolling member.

In addition, the electric motor of the present invention further comprises: a bearing member, which is adapted to hold the rotating shaft in a rotatable manner, and to reciprocate in the axial direction of the output shaft; a support shaft, which penetrates the rolling member along a rotational center axis of the rolling member thereby supporting the rolling member in a rotatable manner; an arm attached individually to both ends of the support shaft, and extends individually toward both sides of the bearing member; and a convex curve formed on at least one of the bearing member and the arm, at which the bearing member and the arm are contacted locally or linearly. According to the invention, the support shaft is tilted together with the rolling member by moving the bearing member in the axial direction to push the arm.

According to the present invention, a torque is generated by supplying a current to the stator coil and the rotor is rotated by the torque. As described, the continuously variable transmission mechanism is situated between the rotor and the output shaft. Therefore, the rotational speed of the rotor can be kept to the speed at which energy efficiency is optimized by varying the speed change ratio of the continuously variable transmission mechanism arbitrarily. Specifically, the continuously variable transmission mechanism is arranged in the inner circumferential side of the rotor. That is, the stator coil, the rotor and the continuously variable transmission mechanism are arranged concentrically. Therefore, in addition to the above-explained advantage, the electric motor of the present invention can be downsized entirely and the energy efficiency of the electric motor can be improved.

Moreover, since the speed change ratio is varied continuously by tilting the rotational center axis of the rolling member, the rotational speed of the rotor can be kept easily to the speed at which energy efficiency is optimized.

In case the rotor is provided with a permanent magnet and the rolling member is formed of magnetic material entirely or partially, the contact pressure between the rolling member and said two of the rotary member can be enhanced by a magnetic force attracting the rolling member toward the rotor.

To the contrary, in case the rotor is provided with a permanent magnet but the rolling member is made of nonmagnetic material, the rolling member will not be attracted by the magnetic force. Therefore, in this case, generation of cogging torque can be prevented.

According to the present invention, a cylindrical case can be used as the outer case. In this case, the end plate is fixed to one of the axial ends of the outer case, and the output shaft is protruded from the other axial end. That is, the end plate can be utilized to fix the electric motor. Therefore, fixing strength of the electric motor can be enhanced.

According to the present invention, when the torque is transmitted between the rotor and the output member, the torque being transmitted will act between the rotor and one of the rotary members, or between the other rotary member and the output member. Then, the torque is converted into a thrust force in the axial direction by the cam mechanism, and at least one of the rotary members is pushed onto the rolling member by the thrust force thus converted. As a result, the contact pressure between the rolling member and the rotary member can be ensured, and the transmission torque capacity is thereby maintained.

In addition to the above-explained advantage, according to the present invention, a ratio between the rotational speeds of the rotor and the output member, that is, the speed change ratio can be varied continuously by moving the bearing member holding the rotating shaft rotatably in the axial direction to tilt the rolling member.

BRIEF DESCRIPTION OF THE DRAWINGS

Fig. 1 is a side sectional view showing one example of an electric motor according to the present invention.
Fig. 2 is a front sectional view showing the electric motor shown in Fig. 1.
Fig. 3 is a front view showing a shift shaft and a shift key.
Fig. 4 is a perspective sectional view explaining a structure of a carrier.
Fig. 5 is a partial view showing one example of a cam mechanism.
Fig. 6 is a graph indicating a relation between a tilt angle and a speed change ratio (i.e., speed ratio).
Fig. 7 is a perspective sectional view showing an example to use the electric motor as an in-wheel motor.
Fig. 8 is a partial view showing another example of a structure of a stator shaft.

BEST MODE FOR CARRYING OUT THE INVENTION

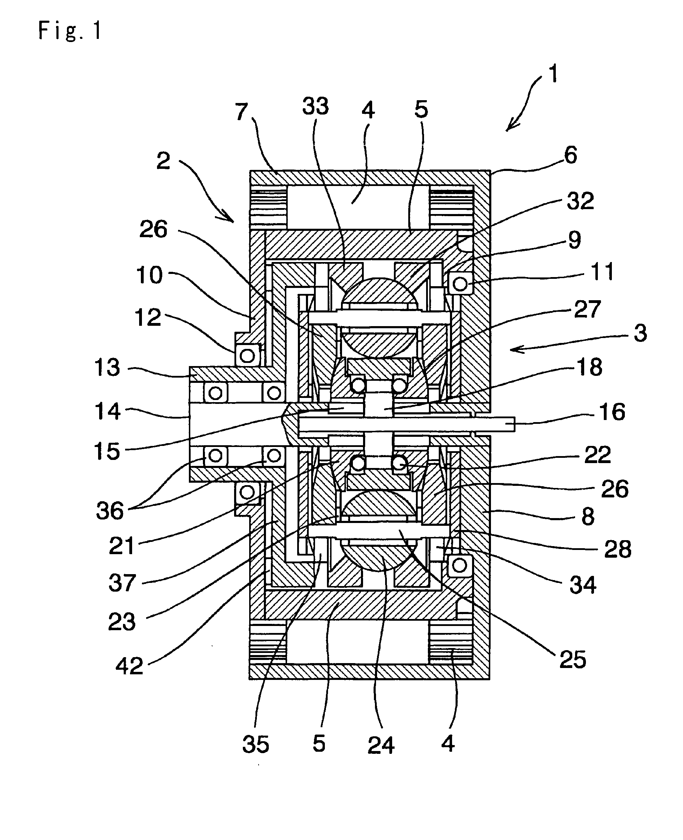

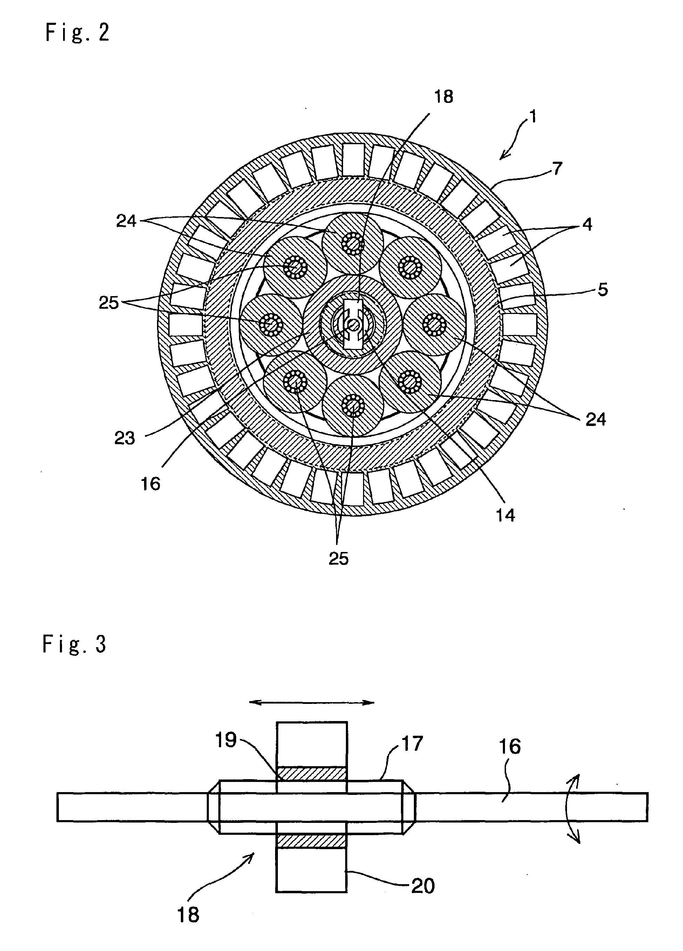

Next, this invention will be described in more detail. An example of an electric motor 1 is shown in Figs. 1 and 2. In the electric motor 1 shown therein, a continuously variable transmission mechanism 3 is arranged inside of an inner circumference of a motor part 2. The motor part 2 comprises a stator coil 4 and a rotor 5 arranged in an inner circumferential side of the stator coil 4. The stator coil 4 is formed by arranging a plurality of coils twining around an iron core in a circular manner, and fixed to an inner face of a cylindrical portion 7 of an outer case 6. The outer case 6 is a bottomed cylindrical member. Specifically, the outer case 6 comprises an end plate 8 as a circular plate, and the cylindrical portion 7 is integrated with a circumference of the end plate 8.

The rotor 5 is also a cylindrical member, and a (not shown) plurality of permanent magnets are attached to an outer circumference of the rotor 5. Thus, the motor part 2 is formed as a permanent magnet type synchronous electric motor. A length of the rotor 5 is substantially identical to that of the cylindrical portion 7, and the rotor 5 is housed in the outer case 6. Flange portions 9 and 10 are formed to extend from both axial ends of the rotor 5 toward an inner circumferential side (i.e., toward a center). Specifically, the flange portion 9 of the end plate 8 side is relatively shorter than the flange portion 10 of the opposite side. In other words, the flange portion 10 of the outer case 6 side is relatively longer than the flange portion 9. In addition, bearing 11 is arranged in an inner circumferential side of the flange portion 9, and a bearing 12 is arranged in an inner circumferential side of the flange portion 10. That is, the rotor 5 is held by those bearings 11 and 12 in a rotatable manner. More specifically, the bearing 11 is fitted onto a protrusion formed on an inner face of the end plate, and the bearing 12 is fitted onto an output shaft 13 to be explained below.

Next, here will be explained the continuously variable transmission mechanism 3. A stator shaft 14 as a fixed shaft extends from a center of the end plate 8 while protruding the outer case 6. The stator shaft 14 is formed coaxially with a center axis of the cylindrical portion 7, and one of end portions thereof is integrated with the end plate 8. A method to integrate the stator shaft 14 with the end plate 8 should not be limited to a specific method. For example, the stator shaft 14 can be integrated with the end plate 8 by a shrinkage fitting method, welding, a bolt etc. As shown in Fig. 1, a hollow portion is formed in the stator shaft 14 from the end portion of the end plate 8 side to a portion slightly above an axially intermediate portion. In addition, two slits 15 of predetermined length are formed on the axially intermediate portion of the stator shaft 14. Specifically, those slits 15 are formed on symmetric portions of the stator shaft 14 across a center axis of the stator shaft 14 while penetrating through the stator shaft 14 from an outer face to the hollow portion.

A shift shaft 16 is inserted into the hollow portion in the stator shaft 14 in a rotatable manner, and one of the end portions of the shift shaft 16 protrudes from the end portion of the stator shaft 14 of the end plate 8 side. In addition, an external thread 17 is formed on an intermediate portion of the shift shaft 16, more accurately, on a portion corresponding to the slit 15, and a shift key 18 is screwed onto the external thread 17. The shift shaft 16 and the shift key 18 are schematically shown in Fig. 3. As shown in Fig. 3, the shift key 18 comprises a cylindrical internal thread 19 screwed onto the external thread 17, and two keys 20 protruding diametrically from the internal thread 19. The key 20 protrudes toward the outer circumferential side of the stator shaft 14 through the slit 15. Therefore, the key 20 of the shift key 18 is moved back and forth in the axial direction of the stator shaft 14 by turning the shift key 18.

A bearing member 21 is fitted loosely onto the stator shaft 14 in a manner to reciprocate in the axial direction. Specifically, the bearing member 21 is an annular member, and a periphery of the bearing member 21 is depressed entirely at an axially intermediate portion thereof. In addition, a leading end of the key 20 is individually engaged with the bearing member 21 at diametrically symmetric two portions of the bearing member 21. Therefore, the bearing member 21 can be moved by the key 20 in the axial direction.

A portion in the vicinity of a bottom of the depressed portion of the bearing member 21 is formed into a smooth concave curve whose cross section is arcuate, and a bearing ball 22 is situated thereon. An idle roller 23 is held by the bearing ball 22 in a rotatable manner at a central portion of the bearing member 21. Specifically, the idle roller 23 is a cylindrical member, and both ends of an inner circumferential face thereof are contacted with the bearing balls 22 to be held by the bearing member 21 through the bearing balls 22 in a rotatable manner. Therefore, the idle roller 23 is moved back and forth in the axial direction together with the bearing member 21.

A plurality of planet balls 24 corresponding to the rolling member of the present invention are arranged around the idle roller 23. Not only a magnetic material but also a nonmagnetic material can be used to form the planet ball 24, and the planet ball 24 is preferably shaped into a perfect sphere. However, an ellipsoidal member like a rugby ball having a smooth outer surface and whose sectional shape is oval may also be used as the planet ball 24. In the example shown in Fig. 2, eight planet balls 24 are provided. In fact, each planet ball 24 shown therein is not contacted with the adjacent planet ball 24. That is, in order not to generate a drag torque between the adjacent planet balls 24 when the planet balls 24 are rotated, a predetermined clearance is maintained individually between the adjacent planet balls 24.

Each of the planet balls 24 is supported in a rotatable manner by a support shaft 25 penetrating the planet ball 24 through a center of the planet ball 24. For example, a bearing is interposed between an outer circumferential face of the support shaft 25 and the planet ball 24, and the planet ball 24 is allowed to rotate by the bearing. As shown in Fig. 1, the support shafts 25 are arranged parallel to the stator shaft 14. More specifically, each of the support shafts 25 is arranged parallel to the stator shaft 14, and adapted to oscillate (i.e., to tilt) in a direction of the plane including a center axis of the stator shaft 14.

Both end portions of the support shaft 25 protrude from the planet ball 24, and an arm 26 is attached to each of the end portions of the support shaft 25. Specifically, the arm 26 is adapted to apply a force for tilting the support shaft 25 penetrating through the planet ball 24. In the example shown in Fig. 1, each of the arms 26 extends from the support shaft 25 toward the stator shaft 14, that is, extends radially toward the center of the electric motor 1. As shown in Fig. 1, a leading end of the arm 26 is tapered (toward the rotational center). The arms 26 thus attached to both ends of the support shaft 25 are individually contacted with side faces (i.e., outer faces) of the bearing member 21 thereby clamping the bearing member 21. For this purpose, an inner face of the leading end of the arm 26 is tapered in a manner to widen a clearance between the opposing inner faces of the arms 26 toward the stator shaft 14. Meanwhile, an outer face of the bearing member 21 is formed into a convex face 27. Therefore, the arm 26 is contacted with the bearing member locally or linearly. Therefore, when the bearing member 21 is moved in the axial direction of the stator shaft 14, the arm 26 is pushed diagonally outwardly by the bearing member 21 at a contact point between the tapered face of the arm 26 and the convex face 27 of the bearing member 21. That is, when the bearing member 21 is moved in the axial direction of the stator shaft 14, the support shaft 25 penetrating through the planet ball 24 as a rotational center axis of the planet ball 24 is inclined with respect to the stator shaft 14 in a plane including the rotational center axis of the stator shaft 14.

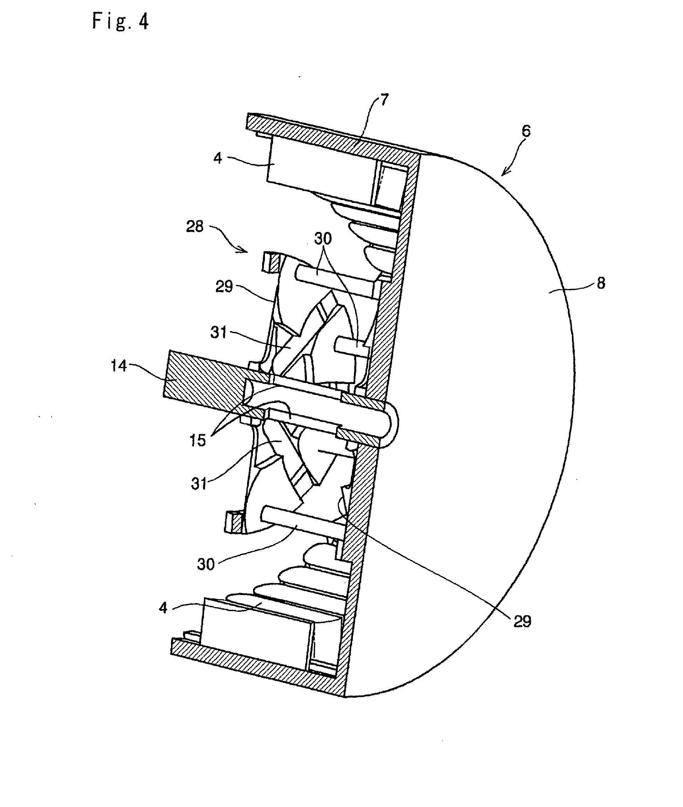

An assembly of the support shaft 25 penetrating the planet ball 24 and the arms 26 is held in a manner not to move in the axial direction of the stator shaft 14. In order to hold the support shaft 25, the planet ball 24 and the arms 26, the electric motor 1 is provided with a carrier 28. As shown in Figs. 1 and 4, the carrier 28 is a member like a cage formed by connecting a pair of circular plates 29 by a plurality of connecting shafts 30. On each opposed face of the circular plate 29, a plurality of radial grooves 31 are formed from the center of the circular plate 29 to an outer circumference of the circular plate 29. Specifically, a number of the radial grooves 31 is same as the number of the arms 26, and a width of the radial groove 31 is substantially identical to that of the arm 26. Accordingly, each of the arms 26 is fitted into the radial groove 31 in a manner to incline the support shaft 25 as explained above. Therefore, the assembly of the arms 26 and the support shaft 25 penetrating through the planet ball 24 is not rotated (or revolved) around the stator shaft 24.

Thus, the carrier 28 is configured as a cage. That is, a periphery of the carrier 28 is not closed. Therefore, the planet balls 24 protrude slightly outwardly from the carrier 28. To the portions of outer faces of the planet balls 24 thus protruding from the carrier 28, two rotary members such as an input disc 32 and an output disc 33 are contacted in a torque transmittable manner. Those input disc 32 and output disc 33 are annular members, and arranged on both right and left side of the planet balls 24 in Fig. 1. Both faces of the input disc 32 and the output disc 33 contacted with the outer face of the planet ball 24 are individually formed into a concave face whose curvature is identical to that of the outer face of the planet ball 24.

More specifically, an outer diameter of the input disc 32 is slightly shorter than an inner diameter of the rotor 5, and the input disc 32 is arranged to be opposed to the comparatively shorter flange portion 9 integrated with the rotor 5. In addition, a cam mechanism 34 is interposed between the flange portion 9 and a back face of the input disc 32. Meanwhile, the output disc 33 corresponding to the output member of the present invention is arranged on the opposite side of the input disc 32 across the planet balls 24. The output disc 33 is connected with an output shaft 13 through a cam mechanism arranged on a back side of the output disc 33.

The output shaft 13 is a hollow shaft and the stator shaft 14 is inserted therein. Specifically, two bearings 36 are fitted onto the stator shaft 14, and the output shaft 13 is fitted onto those bearings 36 in a rotatable manner. One of the end portions of the output shaft 13 protrudes out of the outer case 6, and a flange portion 37 is integrally formed on the other end portion of the output shaft 13 to protrude radially outwardly therefrom. An outer diameter of the flange portion 37 is slightly smaller than the inner diameter of the rotor 5, and substantially identical to those of the aforementioned input disc 32 and the output disc 33. Further, a cylindrical portion is formed from an outer end of the flange portion 37. The cylindrical portion extends outer circumferential side of the carrier 28 toward the output disc 33, and a cam mechanism 35 is interposed between a leading end face of the cylindrical portion and a back face of the output disc 33.

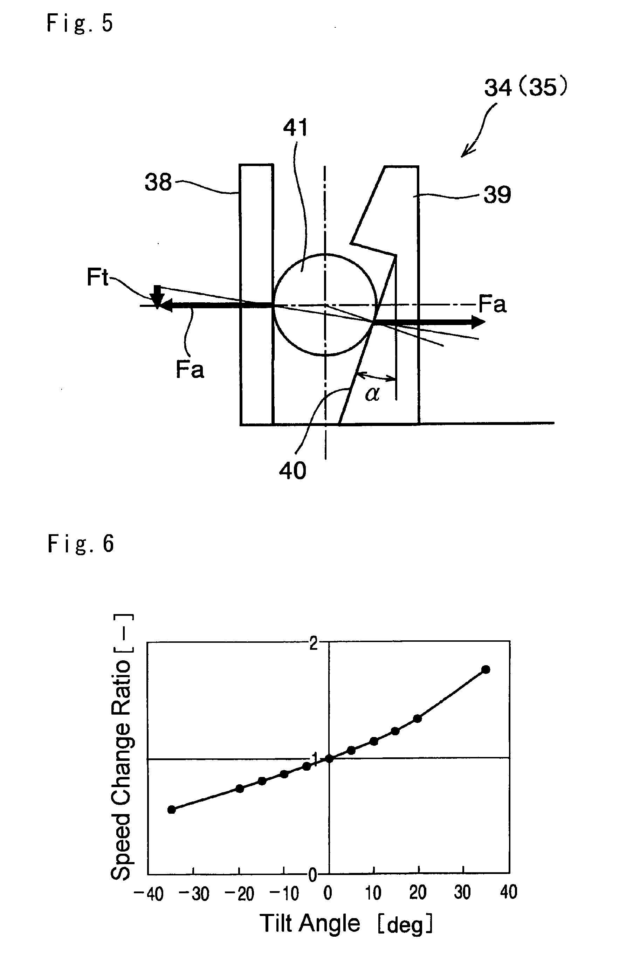

The cam mechanisms 34 and 35 will be explained in more detail hereinafter. Both of the cam mechanisms 34 and 35 are configured to generate a thrust force in the axial direction according to the torque. A principle thereof is shown in Fig. 5. As shown in Fig. 5, a first rotary member 38 and a second rotary member 39 are arranged to be opposed to each other on a common axis, and a torque is to be transmitted therebetween. Further, a cam face 40 is formed on an opposed face of at least one of the rotary members 38 and 39. The cam face 40 is inclined in a manner to decrease a clearance between the rotary members 38 and 39 gradually in the circumferential direction. In other words, a thickness of at least one of the rotary members 38 and 39 is thickened gradually in the circumferential direction. Thus, the clearance between the rotary members 38 and 39 is varied in the circumferential direction, and a cam roller 41 is interposed therebetween.

Specifically, in case a torque is applied to any of the rotary members 38 and 39 in a direction to narrow the clearance between the rotary members 38 and 39 where the cam roller 41 is interposed, the rotary members 38 and 39 are integrated by the cam roller 41. As a result, thrust forces are generated according to the torque and an inclination of the cam face 40. Specifically, a load Ft at a contact point between the cam roller 41 and the rotary member 38 or 39 in the circumferential (or tangential) direction can be expressed by the following formula:

$$Ft = Tin / (n \cdot r);$$

where Tin represents an input torque, n represents a number of cam rollers 41, and r represents a radius of the rotary member 38 or 39 at a portion where the cam roller 41 is situated. Further, a thrust force Fa acting in the axial direction can be calculated by:

$$Fa = Ft / \tan(\alpha / 2);$$

where $\alpha$ represents an inclined angle of the cam face 40.

Therefore, when a predetermined torque is applied to the rotor 5, the torque is transmitted to the input disc 32 through the cam mechanism 34, and at the same time, a thrust force is generated in the axial direction according to the torque thus transmitted. Consequently, the input disc 32 is pushed onto the planet balls 24 by the thrust force. Meanwhile, when the torque is applied to the output disc 33 contacted with the planet ball 24, the torque is then transmitted to the output shaft 13 thorough the cam mechanism 35, and at the same time, a thrust force is generated in the axial direction according to the torque thus transmitted. Consequently, the output disc 33 is pushed onto the planet balls 24 by the thrust force. Thus, the discs 32 and 33 are pushed onto the planet balls 24 according to the torque being transmitted, and a transmission torque capacity is determined in accordance with the thrust force and a coefficient of friction. In addition, a thrust bearing 42 is interposed between the flange portion 37 of the output shaft 13 and the flange portion 10 of the rotor 5.

In the electric motor 1 thus has been explained, the torque is applied to the rotor 5 by supplying a controlled alternating current to the stator coil 4. As described, the rotor 5 is held by the bearings 11 and 12 in a rotatable manner. Therefore, the rotor 5 is rotated when the torque is applied thereto. As also described, the cam mechanism 34 is interposed between the relatively shorter flange portion 9 (i.e., the flange portion 9 of the right side in Fig. 1) and the input disc 32. Therefore, in this case, the rotor 5 is connected with the input disc 32 by the cam mechanism 34 in a manner to rotate integrally, and the input disc 32 is pushed onto the planet balls 24 by the thrust force in the axial direction generated according to the torque of the rotor 5.

As a result, the torque is transmitted from the input disc 32 to the planet balls 24 by the frictional force acting therebetween. As described, each of the planet balls 24 is held in a rotatable manner by the support shaft 25 penetrating therethrough and the idle roller 23, therefore, the planet balls 24 are rotated by the torque transmitted from the input disc 32, and in this case, the idle roller 23 is also rotated. As also described, the output disc 33 is also contacted with the planet balls 24, therefore, the torque is transmitted form the planet balls 24 to the output disc 33 by the frictional force acting therebetween.

As also described, the cam mechanism 35 is interposed between the output disc 33 and the flange portion 37 of the output shaft 13. Therefore, the output disc 33 is connected with the output shaft 13 by the cam mechanism 35 in a manner to rotate integrally, and in this situation, a thrust force is generated in the axial direction according to the torque of the output disc 33. Consequently, the output disc 33 is pushed onto the planet balls 24 by the generated thrust force, and a transmission torque capacity is determined in accordance with the contact pressure therebetween. Thus, the torque of the rotor 5 is transmitted to the output shaft 13 through the continuously variable transmission mechanism 3, and the torque thus transmitted is outputted from the output shaft 13 to a predetermined external equipment.

As described, the torque thus transmitted from the rotor 5 to the output shaft 13 is determined by the transmission torque capacity of the continuously variable transmission mechanism 3, and the transmission torque capacity is governed mainly by the contact pressure between the planet balls 24 and the input disc 32, and the contact pressure between the planet balls 24 and the output disc 33. In case the planet balls 24 are magnetic bodies, the planet balls 24 are attracted by a magnetic force of the permanent magnet arranged in the rotor 5 to be adhered to the input disc 32 and the output disc 33. In this case, therefore, the contact pressure between the planet balls 24 and the input disc 32, and the contact pressure between the planet balls 24 and the output disc 33 are increased so that the transmission torque capacity of the continuously variable transmission mechanism 3 is increased. To the contrary, in case the planet balls 24 are not made of magnetic material, a magnetic attraction will not act on the planet balls 24. However, since the planet balls 24 are not permanent magnets, each clearance between the planet balls 24 will not be varied intermittently even if the planet balls 24 are arranged at regular intervals. Therefore, in this case, generation of cogging torque can be avoided.

More specifically, the torque of the rotor 5 is increased or deceased depending on a speed change ratio of the continuously variable transmission 3, and transmitted to the output shaft 13. The speed change ratio of the continuously variable transmission 3 is varied according to a tilt angle of the support shaft 25 penetrating through the planet ball 24. For example, provided that a radius of the input disc 32 is identical to that of the output disc 33, a rotation radius of the planet ball 24 between a point contacted with the input disc 32 and the rotational center thereof, and a rotation radius of the planet ball 24 between a point contacted with the output disc 33 and the rotational center thereof are identical to each other if the support shaft 25 is kept parallel to the stator shaft 14. Therefore, in this case, the speed change ratio of the continuously variable transmission mechanism 3 is "1".

In case the support shaft 25 is tilted, one of the rotation radius of the planet ball 24 between the point contacted with the input disc 32 and the rotational center thereof, and the rotation radius of the planet ball 24 between the point contacted with the output disc 33 and the rotational center thereof is increased depending on the tilt angle of the support shaft 25. At the same time, the other rotational radius of the planet ball 24 between the point contacted with the input disc 32 or the output disc 33 and the rotational center thereof is decreased depending on the tilt angle of the support shaft 25. Therefore, a rotational speed of the input disc 32 and a rotational speed of the output disc 33 are varied in accordance with the above explained change in the rotational radii of the planet ball 24. As a result, the speed change ratio as a ratio between the rotational speeds of the input disc 32 and the output disc 33 is varied according to the tilt angle of the support shaft 25. Such change in the speed change ratio is depicted in Fig. 6. Specifically, the rotational speed of the output disc 33 with respect to the rotational speed of the input disc 32 on the assumption that the rotational speed of the input disc 32 is "1" is shown in Fig. 6. In Fig. 6, a change in the above-explained rotational speed of the output disc 33 with respect to a change in the tilt angle of the support shaft 25 is plotted and connected with a line.

The planet ball 24 is tilted together with the support shaft 25 by turning the shift shaft 16 using a not shown shifting device such as a motor and a linkage mechanism etc. Specifically, when the shift shaft 16 is turned, the shift key 18 screwed onto the external thread 17 is moved in the axial direction. In this situation, since the shift key 18 is engaged with the bearing member 21, the bearing member 21 is moved together with the shift key 18. As described, the convex face 27 is formed on each side face of the bearing member 21, and arms 26 are contacted with the convex faces 27 locally or linearly. As also described, the arms 26 are held in a manner not to move in the axial direction but allowed to be inclined. Therefore, when the bearing member 21 is moved in the axial direction, the arm 26 is pushed diagonally outwardly by the bearing member 21 at the contact point between the tapered face of the arm 26 and the convex face 27 of the bearing member 21, and the arm 26 is thereby inclined. As a result, the planet ball 24 held rotatably by the support shaft 25 penetrating therethrough is inclined together with arms 26, and a speed change ratio is set according to the tilt angle of the planet ball 24.

Thus, the electric motor 1 of the present invention is capable of outputting the torque generated by the rotor 5 from the output shaft 13 while increasing and decreasing according to the speed change ratio which can be varied continuously (i.e., steplessly). To the contrary, in case of fixing the rotational speed of the output shaft 13 to a constant speed, the rotational speed of the rotor 5 can be varied according to the speed change ratio of the continuously variable transmission mechanism 3. Therefore, according to the electric motor 1 of the present invention, the rotational speed of the rotor 5 can be set to the speed at which energy efficiency is optimized. Here, such speed at which the energy efficiency is optimized can be obtained from a characteristic diagram or the like. As described, the motor part 2 is configured to generate a torque by supplying a current thereto, and the continuously variable transmission mechanism 3 is configured to vary a speed change ratio thereof continuously which changes the torque of the motor part 2. According to the present invention, the electric motor 1 is formed by fitting the motor part 2 together with the continuously variable transmission mechanism 3 arranged concentrically therewith in the outer case 6. Therefore, in addition to the above-explained advantages, the electric motor 1 can be downsized easily and entirely.

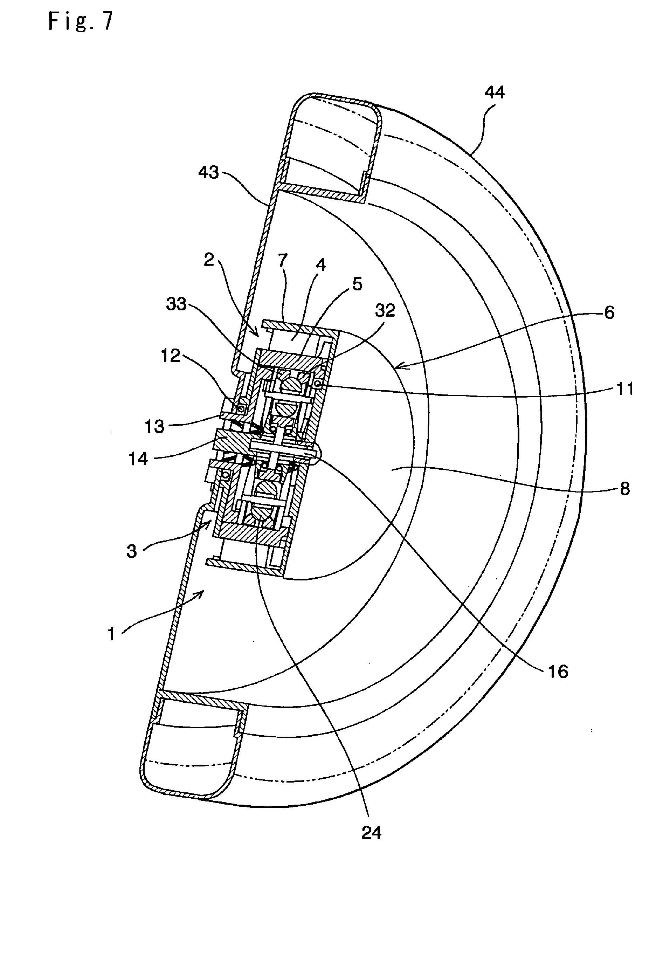

Taking advantage of the above-explained benefits, the electric motor 1 of the present invention can be used for many purposes. For example, as schematically shown in Fig. 7, the electric motor 1 can be used as an in-wheel motor of a vehicle. As shown in Fig. 7, a tire 44 is put on a wheel 43. A through hole is formed in the center of the wheel 43, and the electric motor 1 is attached to the wheel 43 by fitting the output shaft 13 into the through hole. On the other hand, the electric motor 1 is fixed to a not shown vehicle body Specifically, the electric motor 1 is fixed to the vehicle body by fixing the end plate 8 of the outer case 6 to an appropriate portion of the vehicle body. By thus fitting the end plate 8 to the vehicle body, a junction area between the electric motor 1 and the vehicle body can be ensured widely so that a fixing strength between the electric motor 1 and the vehicle body can be enhanced.

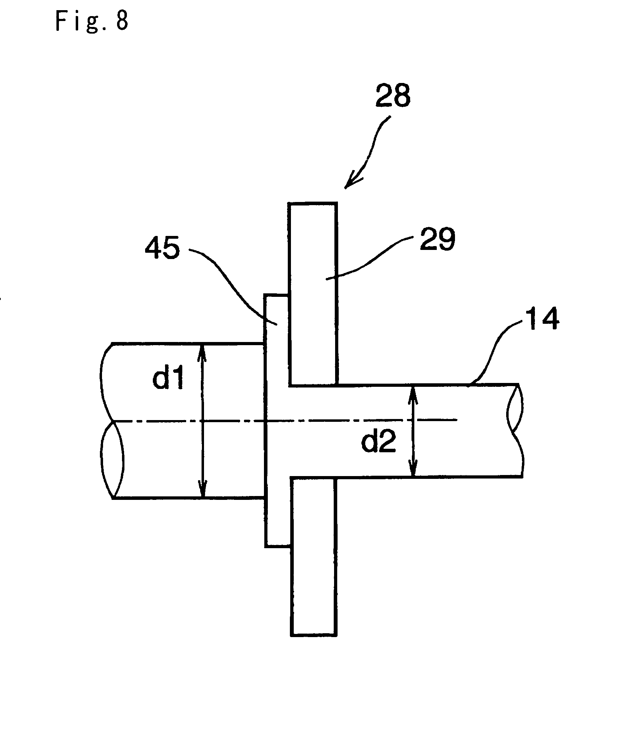

As described, in the electric motor 1, one of the axial ends of the outer case 6 is closed by the end plate 8, and the output shaft 13 protrudes from the other axial end. Therefore, when the output shaft 13 outputs a torque therefrom, a bending load and a shearing load are applied to the output shaft 13 and the stator shaft 14 supporting the output shaft 13 from the inner circumferential side. In order to bear the loads thus applied thereto, for example, the stator shaft 14 is preferably structured as shown in Fig. 8. In the example shown in Fig. 8, an outer diameter d1 of a portion of the stator shaft 14 protruding from the carrier 28 is larger than an outer diameter d2 of an end side of the stator shaft 14 fixed with the outer case 6. In addition, in the diametrically larger portion of the stator shaft 14, a flange portion 45 is formed to be contacted tightly with a side face of the carrier 28. Thus, according to the example shown in Fig. 8, the outer diameter of the portion of the stator shaft 14 protruding from the carrier 28, that is, the outer diameter of the potion of the stator shaft 14 to which the bending load is applied is enlarged to enhance a stiffness thereof. Therefore, a support stiffness of the stator shaft 14 can be enhanced.

The present invention should not be limited to the example thus has been explained. For example, the motor part may also be structured other than the synchronous electric motor. In the above-explained example, one of the discs contacted with the planet balls held by the idle roller serves as the input member, and the other disc serves as the output member. However, the above-explained continuously variable transmission mechanism is a transmission comprising three rotary elements such as the idle roller and the pair of discs. Therefore, one of those three elements may be used as the idler, and one of the other two elements may be used as the input element, and remaining element may be used as the output element. In addition, in case the rolling member is configured to be attracted by the magnetic force, the rolling member may also be formed of magnetic material partially instead of forming the rolling member using the magnetic material entirely. In this case, for example, it is also possible to form only an outer surface of the rolling member using the magnetic material.

**Claims**

1. An electric motor having a speed change function, which is configured to differentiate a rotational speed of a rotor from a rotational speed of an output shaft for outputting a torque transmitted from the rotor, **characterized by** comprising:

   a stator coil, which is arranged on an inner circumferential face of a cylindrical outer case;
   a cylindrical rotor, which is arranged in an inner circumferential side of the stator coil, and which is adapted to generate a torque by receiving a magnetic force generated by the stator coil; and
   a continuously variable transmission mechanism, which is arranged in an inner circumferential side of the rotor, and which is adapted to continuously vary a ratio between a rotational speed of an input member connected with the rotor, and a rotational speed of an output member connected with the output shaft and rotated by the torque from the input member.

2. The electric motor having a speed change function as claimed in claim 1, wherein:

   the continuously variable transmission mechanism comprises
   a rolling member, which is configured to tilt a rotational center axis thereof, and whose outer face is formed into a smooth curved face,
   a rotating shaft whose outer circumferential face is contacted with the rolling member situated in an outer circumferential side thereof, and
   two rotary members contacted with the outer circumferential face of the rolling member in a torque transmittable manner from both sides of the rolling member in a direction along a rotational center axis of the rolling member; and

one of the rotating shaft and the two rotary members is connected with the rotor, and another one of the rotating shaft and the two rotary members serves as an output member.

3. The electric motor having a speed change function as claimed in claim 2, wherein:

a permanent magnet is attached to the rotor; the two rotary members are contacted individually with the outer circumferential face of the rolling member in the rotor side; and the rolling member comprises a magnetic body attracted by the permanent magnet toward the rotor side.

4. The electric motor having a speed change function as claimed in claim 2, wherein:

a permanent magnet is attached to the rotor; the two rotary members are contacted individually with the outer circumferential face of the rolling member in the rotor side; and the rolling member is formed of nonmagnetic material.

5. The electric motor having a speed change function as claimed in any of claims 1 to 4, wherein:

the outer case comprises a cylindrical portion in which the stator coil is attached to an inner circumferential face thereof, and an end plate formed integrally with one of axial ends of the cylindrical portion; and one of the rotary members situated closer to the end plate is connected with the rotor, and the other rotary member is connected with the output shaft protruding in a direction opposite to the end plate.

6. The electric motor having a speed change function as claimed in any of claims 2 to 5, comprising:

a cam mechanism, which is interposed between the rotor and one of the rotary members, and which is adapted to convert a torque acting between the rotor and said one of the rotary members into a thrust force in the axial direction thereby pushing said one of the rotary members onto the rolling member.

7. The electric motor having a speed change function as claimed in any of claims 2 to 6, comprising:

another cam mechanism, which is interposed between the output shaft and the other rotary member functioning as an output member, and which is adapted to convert a torque acting between the output shaft and the other rotary member into a thrust force in the axial direction thereby pushing the other rotary member onto the rolling member.

8. The electric motor having a speed change function as claimed in any of claims 1 to 7, comprising:

a bearing member, which is adapted to hold the rotating shaft in a rotatable manner, and to reciprocate in the axial direction of the output shaft; a support shaft, which penetrates the rolling member along a rotational center axis of the rolling member thereby supporting the rolling member in a rotatable manner; an arm attached individually to both ends of the support shaft, and extends individually toward both sides of the bearing member; a convex curve formed on at least one of the bearing member and the arm, at which the bearing member and the arm are contacted locally or linearly; and wherein the support shaft is tilted together with the rolling member by moving the bearing member in the axial direction to push the arm.

Fig. 1

Fig. 2

Fig. 3

Fig. 4

Fig. 5

Fig. 6

Fig. 7

Fig. 8

<table>
<tr><td colspan="2"><b>INTERNATIONAL SEARCH REPORT</b></td><td>International application No.<br>PCT/JP2009/057885</td></tr>
</table>

**A. CLASSIFICATION OF SUBJECT MATTER**
*H02K7/10(2006.01)i, B60K7/00(2006.01)i, F16H15/52(2006.01)i*

According to International Patent Classification (IPC) or to both national classification and IPC

**B. FIELDS SEARCHED**

Minimum documentation searched (classification system followed by classification symbols)
H02K7/10, B60K7/00, F16H15/52

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-070207 A  (Honda Motor Co., Ltd.),<br>07 March, 2003 (07.03.03),<br>(Family: none) | 1-8 |
| A | JP 2006-345685 A  (ArvinMeritor Technology, L.L.C.),<br>21 December, 2006 (21.12.06),<br>& US 2006/0244317 A1    & EP 1717086 A1 | 1-8 |
| A | JP 2008-075878 A  (Foruburukku Tekunorojizu Inc.),<br>03 April, 2008 (03.04.08),<br>& US 6241636 B1        & EP 1023545 A<br>& WO 1999/019202 A1 | 1-8 |

☒ Further documents are listed in the continuation of Box C.        ☐ See patent family annex.

| | |
|---|---|
| * Special categories of cited documents:<br>"A" document defining the general state of the art which is not considered  to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>13 July, 2009 (13.07.09) | Date of mailing of the international search report<br>21 July, 2009 (21.07.09) |
|---|---|
| Name and mailing address of the ISA/<br>Japanese Patent Office | Authorized officer |
| Facsimile No. | Telephone No. |

Form PCT/ISA/210 (second sheet) (April 2007)

**EP 2 424 081 A1**

<table>
<tr><td colspan="2">INTERNATIONAL SEARCH REPORT</td><td>International application No.</td></tr>
<tr><td colspan="2"></td><td>PCT/JP2009/057885</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-196584 A  (NIDEC Corp.),<br>28 August, 2008 (28.08.08),<br>(Family: none) | 1-8 |
| A | JP 2007-269129 A  (Honda Motor Co., Ltd.),<br>18 October, 2007 (18.10.07),<br>& JP 3960553 B          & EP 1979186 A<br>& WO 2007/116541 A1 | 1-8 |

Form PCT/ISA/210 (continuation of second sheet) (April 2007)

**EP 2 424 081 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007269129 A
- JP 6328950 A
- JP 2008075878 A